# EUROPEAN PATENT SPECIFICATION

(11) **EP 3 543 224 B1**
(45) Date of publication and mention of the grant of the patent: **19.06.2024**
(21) Application number: 19164472.3
(22) Date of filing: 21.03.2019
(51) Int. Cl.: C05D 9/02, C05F 9/00, C05F 11/08

(54) **METHOD FOR THE PREPARATION OF A COMPOSITION FOR THE TREATMENT OF AGRICULTURAL CROPS**
VERFAHREN ZUR HERSTELLUNG EINER ZUSAMMENSETZUNG ZUR BEHANDLUNG VON LANDWIRTSCHAFTLICHEN KULTUREN
PROCÉDÉ DE PRÉPARATION D'UNE COMPOSITION POUR LE TRAITEMENT DE CULTURES AGRICOLES

(30) Priority: 21.03.2018 IT 201800003842
(43) Date of publication of application: 25.09.2019
(73) Proprietor: Consorzio Patata Italiana di Qualita', 40055 Castenaso (BO) (IT)
(72) Inventor: Accinelli, Cesare, 40137 Bologna (IT)
(74) Representative: Studio Torta S.p.A.

(56) References cited:
- EP-A2- 1 153 901
- EP-A2- 2 650 371
- EP-A9- 2 650 371
- WO-A1-99/33341
- WO-A1-2019/215562
- WO-A1-2019/215631
- WO-A1-2019/215697
- WO-A1-2020/021506
- MADHAVAN NAMPOOTHIRI K ET AL: "An overview of the recent developments in polylactide (PLA) research", BIORESOURCE TECHNOLOGY, ELSEVIER, AMSTERDAM, NL, vol. 101, no. 22, 1 November 2010 (2010-11-01), pages 8493-8501, XP027181672, ISSN: 0960-8524 [retrieved on 2010-07-13]

## Description

### CROSS-REFERENCE TO RELATED APPLICATIONS

This patent application claims priority from Italian patent application no. 102018000003842 filed on 21/03/2018.

### TECHNICAL FIELD

The present invention concerns a method for the preparation of a composition, a composition for the treatment of agricultural crops and uses of said composition.

### BACKGROUND OF THE INVENTION

The importance of selenium in the human diet is widely described in the literature (Ros, G. H., van Rotterdam, A. M. D., Bussink, D. W., & Bindraban, P. S. (2016). Selenium fertilization strategies for bio-fortification of food: An agro-ecosystem approach. Plant and Soil, 404(1-2), 99-112). It is also known that the presence of selenium in agricultural ground can vary considerably, from over 1,000 g/kg in seleniferous soils, down to practically nil levels. For this reason in the last 2-3 decades various agronomic approaches have been proposed to increase the concentration of selenium in agricultural products, such as to guarantee an adequate level of this element in the diet (Kikkert J, Hale B, Berkelaar E (2013) Selenium accumulation in durum wheat and spring canola as a function of amending soils with selenite, selenate and or sulphate. Plant Soil 372:629-641).

The various techniques include those based on enrichment of the soil by means of fertilizers containing selenium, those based on the provision of selenium in the irrigation water, also by means of hydroponic cultivation systems, and those entailing the application of this element by means of foliar treatment (Broadley, M.R., Alcock, J., Alford, J., Cartwright, P., Foot, I., Fairweather-Tait, S.J., Hart, D.J., Hurst, R., Knott, P., McGrath, S.P., Meacham, M.C., Norman, K., Mowat, H., Scott, P., Stroud, J.L., Tovey, M., Tucker, M., White, P.J., Young, S.D., Zhao, F.-J. Selenium biofortification of high-yielding winter wheat (Triticum aestivum L.) by liquid or granular Se fertilisation (2010). Plant and Soil, 332 (1), pp. 5-18; Száková, J., Praus, L., Tremlová, J., Kulhánek, M., Tlustoš, P. Efficiency of foliar selenium application on oilseed rape (Brassica napus L.) as influenced by rainfall and soil characteristics (2017). Archives of Agronomy and Soil Science, 63 (9), pp. 1240-1254.).

Frequently, the formulations for foliar applications contain selenium in the form of salts (sodium selenite, sodium selenate, etc.) and coformulations, represented for example by humic compounds or other similar compounds, added to facilitate absorption by the foliage (for example see the Italian patent application ITBO970128). EP 2 650 371 A2 discloses a method for production of organic acids, other molecules and bioactive substances from bioplastic materials, where bioplastics are fragmented and degraded with microorganisms in presence of a culture medium. In this method, selenium is however absent.

The results obtained with the known techniques, however, have so far not proved to be fully satisfactory, since it is necessary to provide relatively high quantities of selenium to obtain significant concentrations in agricultural products.

The object of the present invention is to provide a method for the preparation of a composition, a composition for the treatment of agricultural crops and uses of said composition which overcome, at least partially, the drawbacks of the known art and, at the same time, are easy and inexpensive to implement.

### SUMMARY

According to the present invention a method for the preparation of a composition, a composition for the treatment of agricultural crops and uses of said composition are provided as claimed in the following independent claims and, preferably, in any one of the claims depending directly or indirectly on the independent claims.

In this text, by dimensions of a particle and/or of a granule we mean the length, the width and the thickness of the particle.

The dimensions of the particles are obtained by means of successive screening using sieves with holes having decreasing dimensions (diameters). The diameter of the holes of the first sieve that does not allow passage of the particles indicates the dimensions (i.e. diameter) of the particles.

### DETAILED DISCLOSURE

In accordance with a first aspect of the present invention, a method is provided for the preparation of a composition for the treatment of agricultural crops. Advantageously but not necessarily, the composition is (substantially) solid.

The method comprises an incubation step, during which a biodegradable polymer material (more precisely, particles of a biodegradable polymer material), inorganic selenium (selenium in an ionic form; more precisely, cationic) and at least a microorganism are kept in contact with one another so as to (at least) partially degrade the biodegradable polymer material and at least partially reduce the inorganic selenium (passing from a higher oxidation state to a lower oxidation state) .

In some non-limiting cases, the biodegradable polymer material is completely degraded. In others, the biodegradable polymer material is partially degraded.

According to some non-limiting embodiments, the inorganic selenium has an oxidation state of at least +4. More precisely but not necessarily, it has an oxidation state of +4 or +6.

In some non-limiting cases, the inorganic selenium comprises (in particular, is) (at least) an inorganic selenium salt (for example, sodium selenite: Na₂SeO₃).

Advantageously but not necessarily, during the incubation step 0.5 g to 1.5 g of inorganic selenium (in particular, inorganic selenium salt) are used per litre of biodegradable polymer material. In addition or alternatively, during the incubation step 0.5 g to 1.5 g of inorganic selenium (in particular, inorganic selenium salt) are used for each kilogram of biodegradable polymer material. In addition or alternatively, during the incubation step 0.01% (in particular 0.05%) to 1% (in particular 0.15%) by weight of inorganic selenium (in particular, inorganic selenium salt) are used relative to the weight of the biodegradable polymer material.

Advantageously but not necessarily, during the incubation step approximately 10¹⁰ spores of the microorganism are used per litre of biodegradable polymer material. Alternatively or in addition, during the incubation step at least 10⁵ (in particular, at least 10¹⁰; more in particular, at least 10²⁰) spores are used per kilogram of biodegradable polymer material. More precisely, during the incubation step up to 10⁴⁰ (in particular, up to 10³⁰; more in particular, up to 10²⁰) spores are used per kilogram of biodegradable polymer material.

More precisely, as a result of the reduction of the inorganic selenium (and the - partial - degradation of the polymer material) at least one organic compound (organic compounds) with selenium is obtained. By compound (compounds) with selenium we mean a molecule (molecules) that comprises (comprise) one or more selenium atoms.

According to non-limiting embodiments, as a result of reduction of the inorganic selenium (and the - partial - degradation of the polymer material) at least organic compounds with selenium are obtained chosen from the group consisting of: selenium derivatives of lactic acid, selenium derivatives of citric acid, selenium derivatives of fumaric acid, selenium derivatives of methionine, selenium derivatives of cysteine and a combination thereof. For example, as a result of the reduction of inorganic selenium (and the - partial - degradation of the polymer material) at least organic compounds with selenium are obtained chosen from the group consisting of: SeCH₂-CHOH-COOH, HOOC-CHSe-C(OH) (COOH)-CH₂-COOH, HOOC-CSe=CH-COOH, H₃C-S-CHSe-CH₂-CH (NH₂) -COOH, H₃C-S-CH₂-CHSe-CH (NH₂) -COOH, H₃C-S-CH₂-CH₂-CSe (NH₂) -COOH, HS-CHSe-CH(NH₂)-COOH, HS-CH₂-CSe(NH₂)-COOH and a combination thereof.

Following the incubation step, an intermediate composition is obtained. In particular, said composition comprises remains of the biodegradable polymer material (namely the part of the polymer material that has not degraded) and the selenium that has been reduced (more precisely, organic compounds with selenium).

It should be noted that the selenium that has been reduced (more precisely, the selenium part of organic compounds) has surprisingly experimentally proved to be more gradually absorbable by plants. Due to these characteristics, in use, a higher absorption efficiency has been observed.

Advantageously but not necessarily, the method comprises an extrusion step, during which an intermediate composition, obtained following the incubation step, is extruded. More precisely, the intermediate composition is extruded (by means of an extruder) at a temperature (in particular, measured at the outlet hole of the extruder) from 110°C (in particular, 120°C; more in particular 140°C; even more in particular 150°C) to 200°C (in particular, 185°C; more in particular, 165°C) at a pressure (in particular, measured at the outlet hole of the extruder) from 3 (in particular 4; more in particular, 6) to 10 MPa (in particular, 9; more in particular, 7), in particular so as to obtain an extruded material. In particular, during the extrusion step, the extruder is used at 300-380 rpm.

It should be noted that, due to the extrusion, it is possible to obtain (in the extruded material) an intimate combination between the polymer material (more precisely, the remains of the polymer material) and the reduced selenium (more precisely, the selenium part of organic compounds). In particular, the organic compounds with selenium are thus at least partially incorporated in the biodegradable polymer material (more precisely, in the remains of the biodegradable polymer material).

In use, it has been experimentally observed that surprisingly the polymer material is able (more precisely, the remains of the polymer material are able) to create a sort of (biodegradable) adhesive film on the plants (more precisely, on their leaves) when it is applied to them. This allows the selenium to be kept in contact with the plants for longer, thus facilitating its absorption.

It should be noted that it has experimentally been found that the reduced selenium (more precisely, the selenium part of organic compounds) acts synergically with the polymer material. In fact, since it can be absorbed more gradually, a means that allows it to remain in contact with the plant for longer further increases its absorption.

According to some non-limiting embodiments, the biodegradable polymer material (which undergoes the incubation step) comprises (more precisely, consists of) particles with dimensions smaller than 6 mm, in particular smaller than 5 mm, more in particular approximately 1 (more precisely, approximately 3) to approximately 4 mm. More precisely, the biodegradable polymer material does not comprise particles with dimensions larger than 6 mm, in particular larger than 5 mm, more in particular larger than 4 mm and smaller than 1 mm.

In some non-limiting cases, the method also comprises a preliminary pulverization step, which is prior to the incubation step and during which the polymer material is broken into bits so as to obtain the above-mentioned particles.

In particular, during the incubation step, the biodegradable polymer material, the inorganic selenium, the microorganism and water (more in particular, sterile; more in particular, distilled) are kept in contact with one another. More in particular, during the incubation step, the water is from 50% (more precisely, 75%) to 150% (more precisely, 125%) by weight relative to the weight of the biodegradable polymer material.

According to some non-limiting embodiments, during the incubation step, the biodegradable polymer material, the inorganic selenium, the microorganism and the water are kept in contact with one another for at least 24 hours (in particular, 3 to 9 days) at a temperature from 15°C (in particular, 25°C) to 50°C (in particular, 38°C) so as to (at least) partially degrade the biodegradable polymer material and at least partially reduce the inorganic selenium.

In particular, the biodegradable polymer material comprises (more precisely, is) bioplastic (namely polymers derived from sources of renewable material, for example vegetable fats and oils, maize starch, etc.; bioplastic can be obtained from coproducts of agriculture and also from plastic bottles or other containers treated with particular microorganisms).

The biodegradable polymer material comprises a material chosen from the group consisting of: polymers (in particular bioplastics) containing starch, polylactic acids (or, more precisely, poly(lactic acid) or polylactate), polyhydroxyalkanoates and a combination thereof.

The polymer material consists of a combination of starch-based polymers (in particular bioplastics), polylactic acids and polyhydroxyalkanoates with a weight ratio 1/1/1.

The polyhydroxyalkanoates are highly varied and depend on the type of bacteria from which they are synthesized as well as the culture matrix. In particular, the general structural chemical formula is the following: 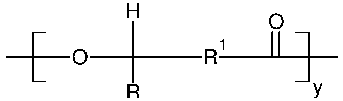 wherein R¹ is an alkyl group (branched or linear) with 1 to 14 carbon atoms; y is the number of monomers and varies from 100 to 30,000. The R group is an alkyl group with a number of carbon atoms ranging from 1 to 15 (branched or linear).

In this text by "aliphatic" we mean a non-aromatic non-substituted (unless specified to the contrary), saturated or unsaturated, linear, branched and/or cyclic hydrocarbon. Non-limiting examples of aliphatic groups are: t-butyl, ethenyl, 1- or 2-propenyl, cyclohexyl.

In this text by "alkyl" we mean a saturated aliphatic (namely an aliphatic group without double or triple carbon-carbon bonds). Non-limiting examples of alkyls are: methyl, n-propyl, t-butyl, cyclohexyl.

Non-limiting examples of polyhydroxyalkanoates are PH3B, PHBV and PHV, the structural forms of which are the following:

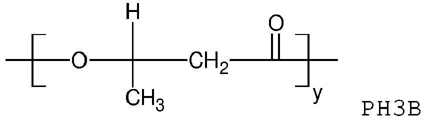

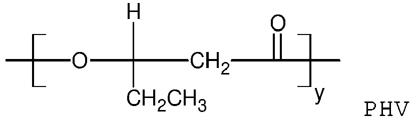

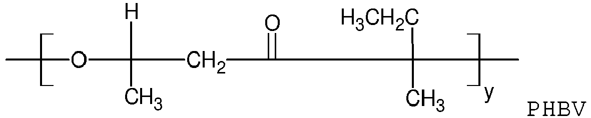

In particular, the biodegradable polymer material comprises at least a polymer, in particular a bioplastic, starch-based (for example, Mater-Bi^{®} (by Novamont), Biolice (by LCI), Bioplast (by Biotec; obtained from potato flour), Cereplast Compostables (by Cereplast), Biotecnomais, Vegemat^{®} (by Vegeplast) and/or Solanyl (obtained from potato peel)).

The microorganism is chosen from the group consisting of: Rhizopus oryzae fungi, Aspergillus niger fungi, Penicillum spp. fungi, Trichoderma spp. fungi and a combination thereof. In particular, when the microorganism comprises a Rhizopus oryzae fungus, the microorganism comprises Rhizopus oryzae CCM 8116 (the Czech Collection of Microorganisms - CCM - is recognized as an international depositary authority under the Treaty of Budapest of 1977 on Recognition of the Deposit of Microorganisms for Patent Procedures; note that samples of the microorganisms deposited at the CCM can be obtained upon direct request to the same). According to some non-limiting embodiments, the microorganism is selected from the group consisting of: Rhizopus oryzae CCM 8116, Aspergillus niger CCM 8189 and a combination thereof (samples of these fungi can be obtained upon request to CCM). In particular, the microorganism comprises (is) a combination of Rhizopus oryzae CCM 8116 fungi and Aspergillus niger CCM 8189 fungi.

Advantageously but not necessarily, the water contains at least four ions chosen from the group consisting of: potassium, sodium, magnesium, iron, phosphate (hydrogen phosphate), nitrate, sulphate, chloride. In particular, the water contains at least the following ions: potassium, sodium, magnesium, iron, phosphate (hydrogen phosphate), nitrate, sulphate, chloride. More in particular, the water comprises (in grams per litre of water) 0.5g to 2g of K₂HPO₄, 0.5g to 7g of NaNO₃, 0.1g to 2g of MgSO₄ × 7H₂O, 0.01g to 0.1 g of FeSO₄ × 7H₂O.

Advantageously but not necessarily, the method comprises a preliminary sterilization step, which is prior to the incubation step and during which the biodegradable polymer material is (at least partially) sterilized. More precisely, during the preliminary sterilization step, the polymer material is treated at least at 100°C (in particular, at least at 120°C; more in particular, up to 180°C) for at least 20 minutes (in particular, for at least 30 minutes; more in particular, up to 60 minutes). According to some non-limiting embodiments, the preliminary sterilization step is performed in an autoclave.

Advantageously but not necessarily, the method comprises an intermediate pulverization step, which is subsequent to the incubation step and in particular prior to the extrusion step (and possibly prior to the intermediate sterilization step, described below) and during which the intermediate composition obtained following the incubation step is broken into bits so as to obtain intermediate particles with dimensions smaller than 6 mm, in particular smaller than 5 mm, more in particular approximately 1 (more precisely, approximately 3) to approximately 4 mm. More precisely, the intermediate particles do not comprise particles with dimensions larger than 6 mm, in particular larger than 5 mm, more in particular larger than 4 mm and smaller than 1 mm. In particular, during the extrusion step, the intermediate composition comprises (more precisely, consists of) the intermediate particles.

Advantageously but not necessarily, the method comprises an intermediate sterilization step, which is subsequent to the incubation step, in particular prior to the extrusion step (and possibly subsequent to the intermediate pulverization step) and during which the intermediate composition obtained following the incubation step is at least partially sterilized. Normally, the at least partially sterilized intermediate composition undergoes the extrusion step.

According to some non-limiting embodiments, during the intermediate sterilization step, the intermediate composition is treated at high temperature (in particular, at a temperature higher than 110°C for at least 20 minutes) and/or by means of UV rays.

More precisely, during the intermediate sterilization step, the intermediate composition is treated at least at 100°C (in particular, at least at 120°C; more in particular, up to 180°C) for at least 20 minutes (in particular, for at least 30 minutes; more in particular, up to 60 minutes).

According to some non-limiting embodiments, the intermediate sterilization step is performed in an autoclave.

In particular, the method also comprises a drying step, during which the water content of the intermediate composition is reduced. More in particular, the intermediate sterilization step is subsequent to the drying step. In some cases, the drying step is prior to the intermediate pulverization step. Advantageously but not necessarily, during the drying step the intermediate composition is treated at a temperature of at least 95°C (in particular, up to approximately 105°C; more in particular approximately 100°C) for at least 12 hours (in particular, at least 18 hours; more in particular, up to 30 hours) .

Advantageously but not necessarily, the method also comprises an addition step which is (prior to the extrusion step and) subsequent to the incubation step (and possibly to the intermediate pulverization step) and during which further inorganic selenium, in particular at least one further selenium salt, is added to the intermediate composition so that during the extrusion step the intermediate composition is extruded together with the further inorganic selenium.

In this way and due to the extrusion, it is possible to obtain (in the extruded material) an intimate combination between the polymer material (more precisely, the remains of the polymer material) and the further inorganic selenium (selenium in ionic form; more precisely, cationic). In particular, the further inorganic selenium is thus at least partially incorporated in the biodegradable polymer material.

It has been experimentally observed that the addition of the further inorganic selenium further improves plant absorption efficiency.

According to some non-limiting embodiments, during the addition step, at least 0.2% (in particular, at least 0.5%; more in particular, at least 1%) by weight of further inorganic selenium (in particular, further selenium salt) is added relative to the weight of the intermediate composition. More precisely, during the addition step, up to 18% (in particular, up to 12%; more in particular, up to 9%) by weight of further inorganic selenium is added relative to the weight of the intermediate composition.

In particular, the further inorganic selenium is defined as indicated above the inorganic selenium. More in particular, the further inorganic selenium comprises (in particular, is) (at least) an inorganic selenium salt (for example, sodium selenite: Na₂SeO₃).

Advantageously but not necessarily, the method comprises a pulverization step of the extruded material, during which the extruded material is broken into bits so as to obtain particles of the extruded material with dimensions smaller than 2 mm (in particular smaller than 1.5 mm; more in particular, smaller than 1 mm; even more in particular smaller than 0.9 mm). Advantageously but not necessarily, the particles of the extruded material have dimensions of approximately 0.1 mm (in particular, approximately 0.3 mm; in particular, approximately 0.4 mm). More precisely, the particles of the extruded material do not comprise particles with dimensions larger than 2 mm, in particular larger than 1 mm (more precisely, larger than 0.9 mm), more in particular smaller than 0.1 mm (in particular, smaller than 0.2 mm).

Advantageously but not necessarily, the method comprises at least a coating step, during which the particles of extruded material are coated with a film comprising polyvinyl alcohol and chitin.

The coating surprisingly improves the shelf-life of the extruded material.

In particular, during the coating step, a 3% to 7% (in particular, approximately 5%) aqueous solution (by weight, relative to the overall weight of the aqueous solution) of polyvinyl alcohol is used and 5% to 9% (in particular, approximately 7%) (by weight, relative to the overall weight of the aqueous solution) of chitin.

In accordance with a second aspect of the present invention, a composition is provided for the treatment of agricultural crops, comprising organic compounds with selenium (e.g.: selenomethionine, selenocysteine) and a biodegradable polymer material, which has granules with dimensions smaller than 2 mm (in particular smaller than 1.5 mm; more in particular, smaller than 1 mm; even more in particular smaller than 0.9 mm). Advantageously but not necessarily, the granules have dimensions of approximately 0.1 mm (in particular, approximately 0.3 mm; in particular, approximately 0.4 mm). More precisely, the granules do not comprise granules with dimensions larger than 2 mm, in particular larger than 1 mm (more precisely, larger than 0.9 mm), more in particular smaller than 0.1 mm (in particular, smaller than 0.2 mm).

According to non-limiting embodiments, at least part of the organic compounds with selenium is selected (in particular, the organic compounds with selenium are selected) from the group consisting of: selenium derivatives of lactic acid, selenium derivatives of citric acid, selenium derivatives of fumaric acid, selenium derivatives of methionine, selenium derivatives of cysteine and a combination thereof. For example, at least part of the organic compounds with selenium is selected (in particular, the organic compounds with selenium are selected) from the group consisting of: SeCH₂-CHOH-COOH, HOOC-CHSe-C(OH)(COOH)-CH₂-COOH, HOOC-CSe=CH-COOH, H₃C-S-CHSe-CH₂-CH(NH₂) -COOH, H₃C-S-CH₂-CHSe-CH(NH₂) -COOH, H₃C-S-CH₂-CH₂-CSe(NH₂) -COOH, HS-CHSe-CH(NH₂) -COOH, HS-CH₂-CSe(NH₂) - COOH and a combination thereof.

Advantageously but not necessarily, the organic compounds with selenium are at least partially incorporated in the biodegradable polymer material (more precisely, in the residues thereof).

In particular, the biodegradable polymer material comprises (more precisely, is) bioplastic.

According to some non-limiting embodiments, the biodegradable polymer material is defined as the biodegradable polymer material described above in accordance with the first aspect of the present invention.

According to some non-limiting embodiments, the composition comprises at least 90% (in particular, at least 93%; more in particular, 97%) by weight, relative to the overall weight of the composition, of biodegradable polymer material. More precisely, the composition comprises up to 99% (in particular, up to 99.5%; more in particular, up to 99.7%) by weight, relative to the overall weight of the composition, of biodegradable polymer material.

Advantageously but not necessarily, the composition comprises from 0.3% (in particular, 0.5%; more in particular 1%) to 7% (in particular, 5%) by weight of selenium relative to the overall weight of the composition. More precisely, at least 10% (in particular, at least 50%) of the selenium of the composition is part of the organic compounds (in particular, as defined above) with selenium. More precisely, up to 90% (in particular, up to 60%; more in particular up to 50%) of the selenium of the composition is part of the organic compounds (in particular, as defined above) with selenium.

According to some non-limiting embodiments, the composition comprises the inorganic selenium (further selenium) (in particular, a selenium salt; more in particular, as defined above in accordance with the first aspect of the present invention). In particular, at least 10% (in particular, at least 50%) of the selenium of the composition is part of the inorganic selenium (further selenium). More precisely, up to 90% (in particular, up to 60%; more in particular up to 50%) of the selenium of the composition is part of the inorganic selenium.

The (further) inorganic selenium is at least partially incorporated in the biodegradable polymer material.

Advantageously but not necessarily, the composition (more precisely, each granule of the composition) has a density up to 30 kg/m³ (in particular up to 25 kg/m³). More precisely, the composition has a density of at least 5 kg/m³ (in particular, at least 10 kg/m³; more in particular, at least 15 kg/m³).

Advantageously but not necessarily, the granules are at least partially provided with a coating comprising (more precisely, consisting of) polyvinyl alcohol (and/or chitin).

In particular, the composition is obtained with the method according to the first aspect of the present invention. In this regard, note that the above-mentioned granules correspond to the cited particles of extruded material (possibly coated).

In accordance with a third aspect of the present invention, a use of the composition for the treatment of agricultural crops is provided; the use comprises an application step, during which the composition is applied to a plant.

Advantageously but not necessarily, during the application step, the composition is applied by foliar application (on the foliage).

In particular, the plant is chosen from the group consisting of: fruit plants, vegetable plants. According to some non-limiting embodiments, the plant is chosen from the group consisting of: potato plants, tomato plants, artichoke plants, carrot plants, cereal plants. In accordance with specific embodiment examples, the plant is chosen from the group consisting of: potato plants, tomato plants, artichoke plants, carrot plants. More precisely, the plant is chosen from the group consisting of: potato plants, tomato plants. In some specific cases, the plant is a potato plant.

According to some non-limiting embodiments, during the application step, the composition is applied with a volume from approximately 300 L/ha (in particular, approximately 400 L/ha of field) to approximately 600 L/ha (in particular, approximately 500 L/ha of field).

Unless explicitly indicated otherwise, the contents of the references (articles, books, patent applications etc.) cited in this text are referred to here in full. In particular, the mentioned references are herein incorporated by reference.

Further characteristics of the present invention will become clear from the following description of merely illustrative non-limiting examples.

### Example 1

This example describes the production of a material for the treatment of agricultural crops.

A polymer material (starch-based bioplastic; in this case Mater-Bi^{®}) was pulverized and homogenized using a mechanical blender (Waring 8011ES; Dynamics Corporation of America, U.S.A.) until obtaining a material with diameter of approximately 3-4 mm. Ultrapure water was then added to the material (approximately 400 mL for every kg of pulverized material) and it was then treated in an autoclave at 120°C for 30 minutes and transferred into 5L flasks provided with sterile cotton plug. For each flask the material introduced was such as to occupy approximately 1/5 of the total volume of the flask (approximately 1.2-1.4 kg of material). To this were added 200 mL of sterile water containing the following salts (in g/L): K₂HPO₄, 1.0; NaNO₃, 3.0; MgSO₄ × 7H₂O, 0.5; KCl, 0.5; FeSO₄ × 7H₂O, 0.01 and selenium (sodium selenite; Na₂SeO₃; 0.5 g/L), a microbial inoculum of *Rhizopus oryzae* CCM 8116 (2-4 mL; aqueous dispersion containing 10¹⁰ spores per mL) and a microbial inoculum of *Aspergillus niger* CCM 8189 (2-4 mL, aqueous dispersion containing 10¹⁰ spores per mL). After 6 days of incubation at 27°C, the material was dried at 100°C for 24 hours and pulverized again using the mechanical blender (Waring 8011ES; Dynamics Corporation of America, U.S.A.) until obtaining a material with diameter of approximately 3-4 mm. After treatment in the autoclave (120°C for 30 minutes), the material was extruded. Before being placed in the extruder, in some cases sodium selenite was added to the material (at a concentration varying from 10 to 90 g per kg of final solid matrix). The material was then loaded in the extruder with variable feed of 5-10 kg/hour, extruder barrel length 30 cm, screw with helical section and diameter 8 cm, outlet hole 0.2 cm, operating with the following parameters: 300-380 rpm; starting temperature 30-50°C; final temperature (outlet) 150-165°C; outlet hole pressure 6-7 MPa. From the extruder a material in granules was obtained with low density (18-20 kg/m³). A non-commercial extruder was used, but it should be highlighted that any extruder, able to operate with the above parameters, can be used.

After the extrusion, the granules with spongy consistency were pulverized in a mechanical blender (Waring 8011ES; Dynamics Corporation of America, U.S.A.) and then coated with a film consisting of polyvinyl alcohol (5% aqueous solution) and chitin (7% aqueous dispersion) with the help of an instrument (Aeromatic Strea 1 - Gea Pharma System AG, Bubendorf, CH) operating according to the principle of spray drying fluid bed coating. The slurry composed of polyvinyl alcohol and chitin was applied with ratio of 2.5 per thousand (volume per pulverized mass - 2.5 mL/kg). The product obtained consisted of granules 0.5-0.8 mm in diameter with coating consisting of a fine film of the polymer PVA and chitin. Keeping the material at ambient temperature for six months, no deterioration was noted either in chemical terms (oxidation) or biological terms (biological degradation).

The microgranules were thus dispersed in water and distributed on the foliage of the crops in volumes of around 400-500 L/ha, by means of ordinary motor pumps for weedkilling or phytoiatric treatments. The granules can also be dispersed with commercial solutions of commercial biostimulants and/or formulations containing agrochemicals, and then distributed simultaneously with the latter.

### Example 2

This example describes tests performed on a plot in the province of Bologna and cultivated with the potato variety Primura according to the standard agricultural practices of the area. Sowing was carried out at the beginning of March and harvesting in the middle of July. In all the plots, the potatoes were irrigated according to the standard practices of the area. The treatments, performed with an ordinary tractor-mounted agrochemical sprayer, were carried out from the beginning of May and repeated for a total of 4 times at intervals of 15 days each.

The compositions (B, C, D, E) were added in the quantity of 1 kg to the water and distributed at a volume of 400 L/ha (in other words, 1 Kg of each composition was added - diluted, dispersed - to 400 L of water and distributed over one hectare of field).

In short, the treatments were the following:
A) non-treated control (water only);
B) selenium (sodium selenite; Na₂SeO₃) formulated with humic acids as described in the Italian patent application ITBO970128 and with selenium concentration of approximately 90 g/L;
C) only microgranules (obtained with the procedure of example 1) extruded (without addition of inorganic selenium prior to the extrusion) and coated obtained from the microbial fermentations as described in example 1;
D) microgranules (obtained with the procedure of example 1) extruded and coated and with addition after fermentation and prior to extrusion of inorganic selenium (sodium selenite; Na₂SeO₃) at the dosage of 90 g/kg (weight of sodium selenite relative to the weight of the material obtained from the fermentation, to which the sodium selenite was added);
E) microgranules (obtained with the procedure of example 1) extruded and coated and with addition, after fermentation and prior to extrusion, of inorganic selenium (sodium selenite; Na₂SeO₃) at the dosage of 90 g/kg (and kept in a closed room at ambient temperature for 3 months - weight of sodium selenite relative to the weight of the material obtained from the fermentation, to which the sodium selenite was added);
F) microgranules (obtained with the procedure of example 1) extruded and coated and with addition, after fermentation and prior to extrusion, of selenium (sodium selenite; Na₂SeO₃) at the dosage of 90 g/kg (weight of sodium selenite relative to the weight of the material obtained from the fermentation, to which the sodium selenite was added), but without addition of selenium in the culture broth.

Following the procedure described in example 3, the selenium values were measured in samples of potatoes obtained by means of the treatments A-F described above. The following results were obtained (in mg/kg):

| | |
|---|---|
| A: | < 0.0004 (below the detectability threshold) |
| B: | 0.032 |
| C: | 0.011 |
| D: | 0.092 |
| E: | 0.090 |
| F: | 0.049 |

The values detected in the tubers collected show that the extruded microgranules with the addition of inorganic selenium (treatment D) presented the highest selenium values. With the total selenium content being equal, the extruded granules containing organic selenium and mineral selenium (treatment D) resulted in significantly and surprisingly higher selenium values than those detected with the formulation described in ITBO970128 (B) and containing inorganic selenium and humic acids, thus confirming the superiority of this approach, relative to the application of mineral selenium only.

On the basis of these unexpected results, it can be hypothesized that the gradual release of organic selenium enables the plant to absorb, for a more prolonged period, the selenium gradually oxidized to inorganic forms. This is particularly highlighted by treatment F, for which the microorganisms and the polymer matrix were incubated without the addition of inorganic selenium in the culture broth.

It should furthermore be noted that, surprisingly, it was possible to keep the microgranules for 3 months without this significantly altering their effectiveness. The PVA and chitin film proved unexpectedly able, at the same time, to rapidly dissolve in water and guarantee an optimal shelf-life.

It was also observed that the treatment C was surprisingly effective, obtaining a result only three times inferior to the treatment B despite the quantity of selenium applied to the plants during the treatment C being 15 times inferior to the quantity of selenium applied to the plants during the treatment B).

### Example 3

This example describes the method used for analyses of the samples in order to measure the selenium content.

The method belongs to the spectrophotometric test technique and is based on digestion in an acid environment of the sample by nitric acid; the selenium ion is reduced to the form IV and converted into selenium hydride by the sodium borohydride solution in an acid environment. The selenium hydride is transferred by means of a peristaltic pump into the nebulization chamber and subsequently into the ICP torch.

The spectrometer used was an inductively coupled plasma optical emission spectrometer (ICP-OES) and relative autosampler. Model: iCap 6200 DUO Thermo fisher. Autosampler make: Cetac model ASX520.

The following instruments were also used: heating block adapted for the sample digestion operations (digestor - 20-station block, make Velp, model DK20); a technical balance; an analytical balance; micropipettes; a shredder (or blender).

The following reagents were used: nitric acid (HNO₃) concentrated 65%; hydrochloric acid (HCl) concentrated 37%; distilled and/or deionized and/or ultrapure water (in compliance with quality 1 and 2 - UNI EN ISO 3696 standard) ; sodium hydroxide (NaOH) drops (pure for analysis); sodium borohydride (NaBH₄ - pure for analysis; sodium borohydride 0.5% p/v in sodium hydroxide 0.5% p/v (brought to ambient temperature prior to use); argon (grade 5.0); nitrogen (grade 5.0).

The following were also used: a standard master selenium solution 1 g/l (1000 ppm); a standard solution 2 mg/l (2 ppm - brought to ambient temperature prior to use); and work standards (2 - 7 - 12 - 17 - 22 ppb and blank reagents). It was brought to ambient temperature prior to use.

### Preparation and conservation of the sample awaiting analysis

The analysis was performed on the product as is inclusive of skin after thorough washing in water to remove any remains of dust or soil; samples with quantities higher than 500g per unit (if small size, e.g. carrots) were cut into 2 equal parts and only one of the two halves was ground, or cut into 4 equal parts (e.g. potatoes) and the two opposite parts were ground; the samples were ground until obtaining a uniform purée.

For the products analysed as is, the ground sample was kept in the fridge to prevent humidity loss; the analysis was performed within 24h from grinding.

### Mineralization of the sample

5 g ± 1g of sample was weighed in the weighing boat with approximation of 0.1 mg and then transferred into the glass digestion tube.

A known quantity of the standard selenium at 2 ppm, which was then used for calculation of the recovery, was added to the sample and then used for calculation of the recovery (positivized).

20 ml ± 5ml of nitric acid were then added. The tubes were transferred to the digestor and the sample was digested according to the slopes:
▪ Slope n° 1 (program 1): 130-150°C and 160-180°C.
▪ Slope n° 2 (program 2): 180-200°C.

When the volume of the sample was reduced to 2 - 4 ml, 2 - 3 ml of water were added with the wash bottle, continuing until the liquid became colourless or slightly yellow/orange coloured up to a final volume of 3-4 ml.

The tubes were removed from the digestor, and the digestor was left to drop to a temperature below 90°C; 20 ml of hydrochloric acid were added to each tube in preparation for ▪ Slope n° 3 (program 3): 80-100°C.

The tubes were then cooled and their content was transferred to a flask or 50 ml class A graduated bottle, washing the tube with small quantities of water. The sample was cooled and brought to volume with water, ready for instrumental reading.

### Instrumental reading

Instrumental reading was performed with ICP-OES (Plasma Emission Spectroscopy).

The analysis method was recalled via the instrument control software.

The calibration was performed at each analysis batch via the use of standards. The instrumental conditions for construction of the calibration line were automatically set when the analysis method was recalled, via the software.
1. Reading of the standards for construction of the calibration line, including the reagent blank to be used as point Φ.
2. Reading of the samples.
3. Reading, every 10 samples, of the 12ppb standard as "reslope"; reading, every 15 samples, of the 17 ppb standard as QC (see table in point 16 for the acceptability criteria).
4. Reading, at the end of the analytical session, of the 22ppb standard as QC.

### Example 4

This example describes tests carried out on a plot in the province of Syracuse and cultivated with the potato variety Bellini according to the standard agricultural practices of the area.

Sowing was carried out at the beginning of December and harvesting in the middle of May. In all the plots, the potatoes were irrigated according to the standard practices of the area. The treatments, performed with an ordinary tractor-mounted agrochemical sprayer, were carried out from the beginning of April and repeated for a total of 4 times at intervals of 15 days each.

The compositions (B, C) were added in the quantity of 1 kg to the water and distributed at a volume of 400 L/ha (in other words, 1 Kg of each composition was placed - diluted, dispersed - in 400 L of water and distributed over one hectare of field).

In short, the treatments were the following:
A) non-treated control;
B) microgranules (obtained with the procedure of example 1) extruded and coated, with addition, after fermentation and prior to extrusion, of inorganic selenium (sodium selenite; Na₂SeO₃) at the dosage of 90 g/kg;
C) selenium (sodium selenite; Na₂SeO₃) added to granules obtained as in B with Folicist^{®} (folic acid, glycine betaine, extract of *Ascophyllum nodosum,* extract of lucerne), a commercial biostimulant produced by Biolchim S.p.A., with a selenium concentration (relative to the Folicist^{®}) of approximately 90 g/L (in this case no water was added).

Following the procedure described in example 3, the selenium values were measured in samples of potatoes obtained by means of the treatments A-E described above. The following results were obtained (in mg/kg):

| | |
|---|---|
| A: | < 0.0004 (detectability threshold) |
| B: | 0.112 |
| D: | 0.142 |

From the obtained results, it can be seen that, in the tubers harvested, the highest selenium values were obtained in the tubers when the selenium was applied as microgranules with or without the biostimulant Folicist. More precisely, the microgranules added to the Folicist determined the highest value. Application of the composition including extrusion (matrix containing polymer residues, biomass, organic selenium and mineral selenium) resulted in improved absorption of the selenium, explainable as greater absorption efficiency and/or increase in the bioavailability period (less washing away, greater adhesion to the leaves). Without extrusion (high temperature, intense mixing and action of the pressure) the efficiency of the composition is lower.

### Example 5

This example describes tests performed on a plot in the province of Ferrara and cultivated with the carrot variety Dordogne according to the standard agricultural practices of the area.

Sowing was carried out at the beginning of August and harvesting at the beginning of December. The treatments, performed with an ordinary tractor-mounted agrochemical sprayer, were carried out approximately 20 days prior to harvesting.

The compositions (B, C) were added in the quantities of 1 kg to the water and distributed at a volume of 400 L/ha (in other words, 1 Kg of each composition was placed - diluted, dispersed - in 400 L of water and distributed over one hectare of field).

In short, the treatments were the following:
A) non-treated control;
B) selenium (sodium selenite; Na₂SeO₃) formulated with humic acids as described in ITBO970128 and with selenium concentration of 90 g/L;
C) extruded coated microgranules with post-fermentation addition of selenium (sodium selenite; Na₂SeO₃) at the final dosage of 90 g/kg.

Following the procedure described in example 3 the selenium values were measured in samples of potatoes obtained by means of the treatments A-C described above. The following results were obtained (in mg/kg):

| | |
|---|---|
| A: | < 0.0004 (detectability threshold) |
| B: | 0.078 |
| C: | 0.153 |

Analysis of the selenium content in the roots highlighted the surprisingly superior effectiveness of the microgranules to that obtained with the treatment with inorganic selenium and humic acids.

On the basis of these unexpected results, it can be hypothesized that this is due partly to the adhesiveness of the composition (presence of extruded polymers). This phenomenon is highlighted in particular in carrots, a crop with foliage consisting of very fine narrow leaves which are therefore more subject to wash-off and/or difficulty in retaining the liquid applied on them.

Prolonged release of the selenium in organic (and also inorganic) form and the adhesiveness of the composition act synergically, in a previously unforeseen manner, to obtain a particularly important effect (treatment C provides a concentration in the carrots practically double that of treatment B).

## Claims

1. A method for the preparation of a composition for the treatment of agricultural crops; the method comprises
an incubation step, during which particles of a biodegradable polymer material, inorganic selenium and at least one microorganism are kept in contact with one another so as to partially degrade the biodegradable polymer material and at least partially reduce the inorganic selenium;
an addition step, which is subsequent to the incubation step and during which further inorganic selenium, in particular at least one selenium salt, is added to an intermediate composition obtained after the incubation step;
the microorganism being chosen from the group consisting of:
Rhizopus oryzae fungi, Aspergillus niger fungi, Penicillium spp. fungi, Trichoderma spp. fungi, and a combination thereof;
with the proviso that, when the microorganism comprises a Rhizopus oryzae fungus, it does not comprise Rhizopus oryzae DSM 905;
the biodegradable polymer material comprising a material chosen from the group consisting of: polymers, in particular bioplastics, containing starch, polylactic acid, polyhydroxyalkanoates, and a combination thereof.

2. The method according to claim 1, and comprising an extrusion step, which is subsequent to the addition step and during which the intermediate composition is extruded together with the further inorganic selenium; for example, during the incubation step, the biodegradable polymer material, the inorganic selenium and the microorganism are kept in contact with one another so as to obtain organic compounds comprising selenium.

3. The method according to claim 2, wherein during the extrusion step, the intermediate composition is extruded together with the further inorganic selenium at a temperature ranging from 110°C to 200°C at a pressure ranging from 3 to 10 MPa.

4. The method according to claim 3, wherein during the extrusion step, the intermediate composition is extruded at a temperature ranging from 120°C to 200°C at a pressure ranging from 4 to 9 MPa.

5. The method according to any one of the claims 2 to 4, wherein, following the extrusion step, an extruded material is obtained; the method comprises an extruded pulverization step, during which the extruded material is broken into bits so as to obtain particles of the extruded material with dimensions that are smaller than 2 mm, in particular smaller than 1.5 mm, more in particular range from approximately 0.1 mm to approximately 0.9 mm.

6. The method according to claim 5, and comprising at least one coating step, during which the extruded material particles are coated with a film comprising polyvinyl alcohol and/or chitin.

7. The method according to any one of the preceding claims, and comprising at least one intermediate sterilization step, during which the intermediate composition obtained, following the incubation step, is at least partially sterilized; in particular, the method also comprises a drying step, during which the water content of the intermediate composition is reduced; in particular, the sterilization step is subsequent to the drying step; in particular, during the sterilization step, the intermediate composition is treated at a high temperature (more in particular, at a temperature exceeding 110°C for at least 20 minutes) and/or through UV rays.

8. The method according to any one of the preceding claims, and comprising an intermediate pulverization step, which is subsequent to the incubation step, prior to the extrusion step and, possibly, prior to the intermediate sterilization step and during which the intermediate composition obtained, following the incubation step, is broken into bits so as to obtain intermediate particles with dimensions that are smaller than 6 mm, in particular smaller than 5 mm, more in particular that are from approximately 3 to approximately 4 mm.

9. The method according to any one of the preceding claims, wherein, during the incubation step, at least 0.01%, in particular up to 1%, is used by weight of inorganic selenium relative to the weight of the biodegradable polymer material and at least 10⁵, in particular up to 10⁴⁰, spores per kilogram of biodegradable polymer material; during the addition step, at least 0.2% is added, in particular up to 18%, of further inorganic selenium (in particular, further selenium salt) relative to the weight of the intermediate composition.

10. The method according to any one of the preceding claims wherein, during the incubation step, the biodegradable polymer material, the inorganic selenium, the microorganism and water are kept in contact together for at least 24 hours at a temperature from 15°C to 50°C so as to partially degrade the biodegradable polymer material, at least partially reduce the inorganic selenium and obtain organic compounds comprising selenium; the biodegradable polymer material comprises bioplastic.

11. The method according to any one of the preceding claims, wherein, during the incubation step, the biodegradable polymer material, the inorganic selenium, the microorganism and water are kept in contact with one another;
the inorganic selenium comprises an inorganic selenium salt;
the water contains at least four ions chosen from the group consisting of: potassium, sodium, magnesium, iron, phosphate (hydrogen phosphate), nitrate, sulphate, chloride; the biodegradable polymer material comprises particles with dimensions ranging from 1 to 5 mm.

12. The method according to any one of the preceding claims, wherein, during the incubation step, the biodegradable polymer material, the inorganic selenium, the microorganism and water are kept in contact with one another;
the inorganic selenium comprises sodium selenite; the microorganism is chosen from the group consisting of: Rhizopus oryzae CCM 8116, Aspergillus niger CCM 8189, and a combination thereof; the water contains at least the following ions: potassium, sodium, magnesium, iron, phosphate (hydrogen phosphate), nitrate, sulphate, chloride; the biodegradable polymer material comprises at least one polymer, in particular a bioplastic, containing starch.

13. A composition for the treatment of agricultural crops and comprising at least one organic compound comprising selenium; a biodegradable polymer material, which has granules with dimensions that are smaller than 2 mm, in particular smaller than 1.5 mm, more in particular range from approximately 0.1 mm to approximately 0.9 mm; and inorganic selenium (more in particular, the inorganic selenium is at least partially incorporated in the biodegradable polymer material);
the biodegradable polymer material comprising a material chosen from the group consisting of: polymers, in particular bioplastics, containing starch, polylactic acid, polyhydroxyalkanoates, and a combination thereof.

14. The composition according to claim 13, the organic compounds comprising selenium are at least partially incorporated in the biodegradable polymer material; in particular, the biodegradable polymer material comprises bioplastic.

15. The composition according to claim 13 or 14, wherein the composition comprises 0.3% to 7% by weight of selenium relative to the total weight of the composition; at least 10% of the selenium is part of the organic compounds comprising selenium; the organic compound comprising selenium is chosen from the group consisting of: selenium derivatives of lactic acid, selenium derivatives of citric acid, selenium derivatives of fumaric acid, selenium derivatives of methionine, selenium derivatives of cysteine, and a combination thereof.

16. The composition according to one of the claims from 13 to 15 obtained by means of a method according to any one of claims 1 to 12.

17. A use of a composition according to any one of claims 13 to 16 for the treatment of agricultural crops; the use comprises an application step, during which the composition is applied to a plant.

18. The use according to claim 17, wherein, during the application step, the composition is applied on the leaves.

19. The use according to claim 17 or 18, wherein the plant is chosen from the group consisting of: fruit plants, vegetable plants.

## Patentansprüche

1. Verfahren zur Herstellung einer Zusammensetzung für die Behandlung von landwirtschaftlichen Kulturen; wobei das Verfahren umfasst:
einen Inkubationsschritt, während dessen Partikel eines bioabbaubaren Polymermaterials, anorganisches Selen und mindestens ein Mikroorganismus in Kontakt miteinander gehalten werden, um das bioabbaubare Polymermaterial teilweise abzubauen und das anorganische Selen mindestens teilweise zu reduzieren;
einen Additionsschritt, der sich an den Inkubationsschritt anschließt und während dessen weiteres anorganisches Selen, speziell mindestens ein Selensalz, zu einer nach dem Inkubationsschritt erhaltenen Zwischenzusammensetzung zugegeben wird;
wobei der Mikroorganismus ausgewählt ist aus der Gruppe bestehend aus: Rhizopus-oryzae-Pilzen, Aspergillus-niger-Pilzen, Penicillium-spp.-Pilzen, Trichoderma-spp.-Pilzen und einer Kombination davon; unter der Voraussetzung, dass, wenn der Mikroorganismus einen Rhizopus-oryzae-Pilz umfasst, er nicht Rhizopus oryzae DSM 905 umfasst;
wobei das bioabbaubare Polymermaterial ein Material umfasst, das ausgewählt ist aus der Gruppe bestehend aus: Polymeren, speziell Biokunststoffen, die Stärke, Polymilchsäure, Polyhydroxyalkanoate und eine Kombination davon enthalten.

2. Verfahren nach Anspruch 1, und umfassend einen Extrusionsschritt, der sich an den Additionsschritt anschließt und während dessen die Zwischenzusammensetzung zusammen mit dem weiteren anorganischen Selen extrudiert wird; beispielsweise werden während des Inkubationsschritts das bioabbaubare Polymermaterial, das anorganische Selen und der Mikroorganismus miteinander in Kontakt gehalten, um organische Verbindungen zu erhalten, die Selen umfassen.

3. Verfahren nach Anspruch 2, wobei während des Extrusionsschritts die Zwischenzusammensetzung zusammen mit dem weiteren anorganischen Selen bei einer Temperatur im Bereich von 110 °C bis 200 °C und einem Druck im Bereich von 3 bis 10 MPa extrudiert wird.

4. Verfahren nach Anspruch 3, wobei während des Extrusionsschritts die Zwischenzusammensetzung bei einer Temperatur im Bereich von 120 °C bis 200 °C bei einem Druck im Bereich von 4 bis 9 MPa extrudiert wird.

5. Verfahren nach einem der Ansprüche 2 bis 4, wobei nach dem Extrusionsschritt ein extrudiertes Material erhalten wird; wobei das Verfahren einen Pulverisierungsschritt des extrudierten Materials umfasst, während dessen das extrudierte Material in Stücke gebrochen wird, um Partikel des extrudierten Materials mit Abmessungen, die kleiner als 2 mm, speziell kleiner als 1,5 mm, sind, spezieller im Bereich von etwa 0,1 mm bis etwa 0,9 mm, zu erhalten.

6. Verfahren nach Anspruch 5, umfassend mindestens einen Beschichtungsschritt, während dessen die Partikel des extrudierten Materials mit einem Film beschichtet werden, der Polyvinylalkohol und/oder Chitin umfasst.

7. Verfahren nach einem der vorstehenden Ansprüche, umfassend mindestens einen Zwischensterilisationsschritt, während dessen die nach dem Inkubationsschritt erhaltene Zwischenzusammensetzung mindestens teilweise sterilisiert wird; speziell umfasst das Verfahren auch einen Trocknungsschritt, während dessen der Wassergehalt der Zwischenzusammensetzung reduziert wird; speziell erfolgt der Sterilisierungsschritt im Anschluss an den Trocknungsschritt; speziell wird während des Sterilisierungsschritts die Zwischenzusammensetzung bei einer hohen Temperatur (spezieller bei einer Temperatur von mehr als 110 °C für mindestens 20 Minuten) und/oder durch UV-Strahlen behandelt.

8. Verfahren nach einem der vorstehenden Ansprüche, und umfassend einen Zwischenpulverisierungsschritt im Anschluss an den Inkubationsschritt, vor dem Extrusionsschritt und gegebenenfalls vor dem Zwischensterilisierungsschritt, während dessen die nach dem Inkubationsschritt erhaltene Zwischenzusammensetzung in Stücke gebrochen wird, um Zwischenpartikel mit Abmessungen, die kleiner als 6 mm, speziell kleiner als 5 mm, sind, spezieller von etwa 3 bis etwa 4 mm, zu erhalten.

9. Verfahren nach einem der vorstehenden Ansprüche, wobei während des Inkubationsschritts mindestens 0,01 Gew.-%, speziell bis zu 1 Gew.-%, anorganisches Selen, bezogen auf das Gewicht des bioabbaubaren Polymermaterials, und mindestens 10⁵, speziell bis zu 10⁴⁰, Sporen pro Kilogramm bioabbaubaren Polymermaterials verwendet werden; während des Additionsschrittes mindestens 0,2 %, speziell bis zu 18 %, weiteres anorganisches Selen (speziell weiteres Selensalz), bezogen auf das Gewicht der Zwischenzusammensetzung, zugegeben wird.

10. Verfahren nach einem der vorstehenden Ansprüche, wobei während des Inkubationsschritts das bioabbaubare Polymermaterial, das anorganische Selen, der Mikroorganismus und Wasser für mindestens 24 Stunden bei einer Temperatur von 15 °C bis 50 °C miteinander in Kontakt gehalten werden, um das bioabbaubare Polymermaterial teilweise abzubauen, das anorganische Selen mindestens teilweise zu reduzieren und organische Verbindungen zu erhalten, die Selen umfassen; wobei das bioabbaubare Polymermaterial Biokunststoff umfasst.

11. Verfahren nach einem der vorstehenden Ansprüche, wobei während des Inkubationsschritts das bioabbaubare Polymermaterial, das anorganische Selen, der Mikroorganismus und Wasser miteinander in Kontakt gehalten werden;
das anorganische Selen ein anorganisches Selensalz umfasst;
das Wasser mindestens vier Ionen enthält, die ausgewählt sind aus der Gruppe bestehend aus: Kalium, Natrium, Magnesium, Eisen, Phosphat (Hydrogenphosphat), Nitrat, Sulfat, Chlorid; das bioabbaubare Polymermaterial Partikel mit Abmessungen im Bereich von 1 bis 5 mm umfasst.

12. Verfahren nach einem der vorstehenden Ansprüche, wobei während des Inkubationsschritts das bioabbaubare Polymermaterial, das anorganische Selen, der Mikroorganismus und Wasser miteinander in Kontakt gehalten werden;
das anorganische Selen Natriumselenit umfasst; der Mikroorganismus ausgewählt ist aus der Gruppe bestehend aus: Rhizopus oryzae CCM 8116, Aspergillus niger CCM 8189, und einer Kombination davon; das Wasser mindestens die folgenden Ionen enthält: Kalium, Natrium, Magnesium, Eisen, Phosphat (Hydrogenphosphat), Nitrat, Sulfat, Chlorid; das bioabbaubare Polymermaterial mindestens ein Polymer, speziell einen Biokunststoff, der Stärke enthält, umfasst.

13. Zusammensetzung für die Behandlung landwirtschaftlicher Kulturen, und umfassend mindestens eine organische Verbindung, die Selen umfasst; ein bioabbaubares Polymermaterial, das Granulate mit Abmessungen, die kleiner als 2 mm, speziell kleiner als 1,5 mm, sind, spezieller im Bereich von etwa 0,1 mm bis etwa 0,9 mm, aufweist; und anorganisches Selen (spezieller ist das anorganische Selen mindestens teilweise in das bioabbaubare Polymermaterial eingearbeitet);
wobei das bioabbaubare Polymermaterial ein Material umfasst, das ausgewählt ist aus der Gruppe bestehend aus: Polymeren, speziell Biokunststoffen, die Stärke, Polymilchsäure, Polyhydroxyalkanoate und eine Kombination davon enthalten.

14. Zusammensetzung nach Anspruch 13, wobei die organischen Verbindungen, die Selen umfassen, mindestens teilweise in das bioabbaubare Polymermaterial eingearbeitet sind; speziell umfasst das bioabbaubare Polymermaterial Biokunststoff.

15. Zusammensetzung nach Anspruch 13 oder 14, wobei die Zusammensetzung 0,3 Gew.-% bis 7 Gew.-% Selen, bezogen auf das Gesamtgewicht der Zusammensetzung, umfasst; wobei mindestens 10 % des Selens Teil der Selen umfassenden organischen Verbindungen sind; wobei die Selen umfassende organische Verbindung ausgewählt ist aus der Gruppe bestehend aus: Selenderivaten von Milchsäure, Selenderivaten von Zitronensäure, Selenderivaten von Fumarsäure, Selenderivaten von Methionin, Selenderivaten von Cystein und einer Kombination davon.

16. Zusammensetzung nach einem der Ansprüche 13 bis 15, erhalten durch ein Verfahren nach einem der Ansprüche 1 bis 12.

17. Verwendung einer Zusammensetzung nach einem der Ansprüche 13 bis 16 zur Behandlung landwirtschaftlicher Kulturen; wobei die Verwendung einen Anwendungsschritt umfasst, während dessen die Zusammensetzung auf eine Pflanze aufgebracht wird.

18. Verwendung nach Anspruch 17, wobei während des Anwendungsschritts die Zusammensetzung auf die Blätter aufgebracht wird.

19. Verwendung nach Anspruch 17 oder 18, wobei die Pflanze ausgewählt ist aus der Gruppe bestehend aus: Obstpflanzen, Gemüsepflanzen.

## Revendications

1. Procédé pour la préparation d'une composition pour le traitement de cultures agricoles ; le procédé comprend
une étape d'incubation, au cours de laquelle des particules d'un matériau polymère biodégradable, du sélénium inorganique et au moins un micro-organisme sont maintenus en contact les uns avec les autres de manière à dégrader partiellement le matériau polymère biodégradable et à réduire au moins partiellement le sélénium inorganique ;
une étape d'addition, qui est postérieure à l'étape d'incubation et au cours de laquelle du sélénium inorganique supplémentaire, en particulier au moins un sel de sélénium, est ajouté à une composition intermédiaire obtenue après l'étape d'incubation ;
le micro-organisme étant choisi dans le groupe constitué de : champignons Rhizopus oryzae, champignons Aspergillus niger, champignons Penicillium spp., champignons Trichoderma spp., et une combinaison de ceux-ci ; à condition que, lorsque le micro-organisme comprend un champignon Rhizopus oryzae, il ne comprenne pas Rhizopus oryzae DSM 905 ;
le matériau polymère biodégradable comprenant un matériau choisi dans le groupe constitué de : polymères, en particulier bioplastiques, contenant de l'amidon, de l'acide polylactique, des polyhydroxyalcanoates, et une combinaison de ceux-ci.

2. Procédé selon la revendication 1, et comprenant une étape d'extrusion, qui est postérieure à l'étape d'addition et au cours de laquelle la composition intermédiaire est extrudée conjointement avec le sélénium inorganique supplémentaire ; par exemple, au cours de l'étape d'incubation, le matériau polymère biodégradable, le sélénium inorganique et le micro-organisme sont maintenus en contact les uns avec les autres de manière à obtenir des composés organiques comprenant du sélénium.

3. Procédé selon la revendication 2, dans lequel, au cours de l'étape d'extrusion, la composition intermédiaire est extrudée conjointement avec le sélénium inorganique supplémentaire à une température allant de 110 °C à 200 °C à une pression allant de 3 à 10 MPa.

4. Procédé selon la revendication 3, dans lequel au cours de l'étape d'extrusion, la composition intermédiaire est extrudée à une température allant de 120 °C à 200 °C à une pression allant de 4 à 9 MPa.

5. Procédé selon l'une quelconque des revendications 2 à 4, dans lequel, à la suite de l'étape d'extrusion, un matériau extrudé est obtenu ; le procédé comprend une étape de pulvérisation extrudée, au cours de laquelle le matériau extrudé est brisé en morceaux de manière à obtenir des particules du matériau extrudé dont les dimensions sont inférieures à 2 mm, en particulier inférieures à 1,5 mm, plus particulièrement allant d'approximativement 0,1 mm à approximativement 0,9 mm.

6. Procédé selon la revendication 5, et comprenant au moins une étape d'enrobage, au cours de laquelle les particules de matériau extrudé sont enrobées d'un film comprenant de l'alcool polyvinylique et/ou de la chitine.

7. Procédé selon l'une quelconque des revendications précédentes, et comprenant au moins une étape de stérilisation intermédiaire, au cours de laquelle la composition intermédiaire obtenue, à la suite de l'étape d'incubation, est au moins partiellement stérilisée ; en particulier, le procédé comprend également une étape de séchage, au cours de laquelle la teneur en eau de la composition intermédiaire est réduite ; en particulier, l'étape de stérilisation est postérieure à l'étape de séchage ; en particulier, au cours de l'étape de stérilisation, la composition intermédiaire est traitée à haute température (plus particulièrement à une température dépassant 110 °C pendant au moins 20 minutes) et/ou par des rayons UV.

8. Procédé selon l'une quelconque des revendications précédentes, et comprenant une étape de pulvérisation intermédiaire, qui est postérieure à l'étape d'incubation, antérieure à l'étape d'extrusion et, facultativement, antérieure à l'étape de stérilisation intermédiaire et au cours de laquelle la composition intermédiaire obtenue, à la suite de l'étape d'incubation, est brisée en morceaux de manière à obtenir des particules intermédiaires dont les dimensions sont inférieures à 6 mm, en particulier inférieures à 5 mm, plus particulièrement qui vont d'approximativement 3 à approximativement 4 mm.

9. Procédé selon l'une quelconque des revendications précédentes, dans lequel, au cours de l'étape d'incubation, sont utilisés au moins 0,01 %, en particulier jusqu'à 1 %, en poids de sélénium inorganique par rapport au poids du matériau polymère biodégradable et au moins 10⁵, en particulier jusqu'à 10⁴⁰, spores par kilogramme de matériau polymère biodégradable ; au cours de l'étape d'addition, sont ajoutés au moins 0,2 %, en particulier jusqu'à 18 %, de sélénium inorganique supplémentaire (en particulier, de sel de sélénium supplémentaire) par rapport au poids de la composition intermédiaire.

10. Procédé selon l'une quelconque des revendications précédentes dans lequel, au cours de l'étape d'incubation, le matériau polymère biodégradable, le sélénium inorganique, le micro-organisme et l'eau sont maintenus en contact ensemble pendant au moins 24 heures à une température allant de 15 °C à 50 °C de manière à dégrader partiellement le matériau polymère biodégradable, à réduire au moins partiellement le sélénium inorganique et à obtenir des composés organiques comprenant du sélénium ; le matériau polymère biodégradable comprend du bioplastique.

11. Procédé selon l'une quelconque des revendications précédentes, dans lequel, au cours de l'étape d'incubation, le matériau polymère biodégradable, le sélénium inorganique, le micro-organisme et l'eau sont maintenus en contact les uns avec les autres ;
le sélénium inorganique comprend un sel de sélénium inorganique ;
l'eau contient au moins quatre ions choisis dans le groupe constitué de : potassium, sodium, magnésium, fer, phosphate (hydrogénophosphate), nitrate, sulfate, chlorure ; le matériau polymère biodégradable comprend des particules dont les dimensions vont de 1 à 5 mm.

12. Procédé selon l'une quelconque des revendications précédentes, dans lequel, au cours de l'étape d'incubation, le matériau polymère biodégradable, le sélénium inorganique, le micro-organisme et l'eau sont maintenus en contact les uns avec les autres ;
le sélénium inorganique comprend du sélénite de sodium ; le micro-organisme est choisi dans le groupe constitué de : Rhizopus oryzae CCM 8116, Aspergillus niger CCM 8189, et une combinaison de ceux-ci ; l'eau contient au moins les ions suivants : potassium, sodium, magnésium, fer, phosphate (hydrogénophosphate), nitrate, sulfate, chlorure ; le matériau polymère biodégradable comprend au moins un polymère, en particulier un bioplastique, contenant de l'amidon.

13. Composition pour le traitement de cultures agricoles et comprenant au moins un composé organique comprenant du sélénium ; un matériau polymère biodégradable, qui a des granules dont les dimensions sont inférieures à 2 mm, en particulier inférieures à 1,5 mm, plus particulièrement vont d'approximativement 0,1 mm à approximativement 0,9 mm ; et du sélénium inorganique (plus particulièrement, le sélénium inorganique est au moins partiellement incorporé dans le matériau polymère biodégradable) ;
le matériau polymère biodégradable comprenant un matériau choisi dans le groupe constitué de : polymères, en particulier bioplastiques, contenant de l'amidon, de l'acide polylactique, des polyhydroxyalcanoates, et une combinaison de ceux-ci.

14. Composition selon la revendication 13, les composés organiques comprenant du sélénium sont au moins partiellement incorporés dans le matériau polymère biodégradable ; en particulier, le matériau polymère biodégradable comprend du bioplastique.

15. Composition selon la revendication 13 ou 14, dans lequel la composition comprend 0,3 % à 7 % en poids de sélénium par rapport au poids total de la composition ; au moins 10 % du sélénium fait partie des composés organiques comprenant du sélénium ; le composé organique comprenant du sélénium est choisi dans le groupe constitué de : dérivés de sélénium d'acide lactique, dérivés de sélénium d'acide citrique, dérivés de sélénium d'acide fumarique, dérivés de sélénium de méthionine, dérivés de sélénium de cystéine, et une combinaison de ceux-ci.

16. Composition selon l'une des revendications de 13 à 15 obtenue au moyen d'un procédé selon l'une quelconque des revendications 1 à 12.

17. Utilisation d'une composition selon l'une quelconque des revendications 13 à 16 pour le traitement de cultures agricoles ; l'utilisation comprend une étape d'application, au cours de laquelle la composition est appliquée à une plante.

18. Utilisation selon la revendication 17, dans laquelle, au cours de l'étape d'application, la composition est appliquée sur les feuilles.

19. Utilisation selon la revendication 17 ou 18, dans laquelle la plante est choisie dans le groupe constitué de : plantes fruitières, plantes légumières.
